# EUROPÄISCHE PATENTANMELDUNG

(11) **EP 0 545 148 A1**
(43) Veröffentlichungstag der Anmeldung: **09.06.1993**
(21) Anmeldenummer: 92119688.7
(22) Anmeldetag: 19.11.1992
(51) Int. Cl.: G01N 31/22, C09B 56/04, C09B 29/00, C09B 35/215

(54) **Indikatoren zur Bestimmung der Protonenkonzentration**

(30) Priorität: 29.11.1991 DE 4139302
(71) Anmelder: MERCK PATENT GmbH, D-64271 Darmstadt (DE)
(72) Erfinder: Fischer, Wolfgang, Dr., W-6100 Darmstadt (DE); Klink, Rainer, Dr., W-6100 Darmstadt (DE)

(57) **Zusammenfassung**

Die Erfindung betrifft Indikatoren zur Bestimmung der Protonenkonzentration stark saurer wäßriger Lösungen, die dadurch gekennzeichnet sind, daß sie mindestens eine Verbindung der allgemeinen Formel (I) enthalten 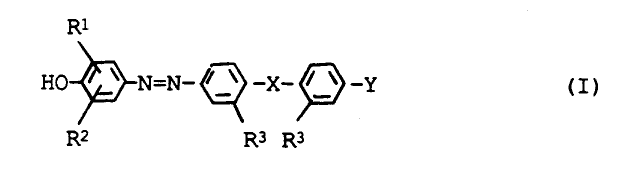
worin
- X: = CH =CH, NH,
- Y: = NO₂, 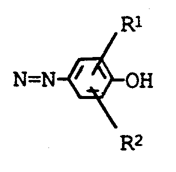
- R¹, R²: = H, F, Cl, Br, NO₂, OH, NH₂, Alkyl mit 1-6 C-Atomen,
- R³: = H, SO₃Na
bedeuten.

## Beschreibung

Die Erfindung betrifft Indikatoren zur Bestimmung der Protonenkonzentration stark saurer wäßriger Lösungen.

Der übliche, täglich im Labor oder auch in der Umwelt benutzte pH-Bereich geht von pH 0 bis pH 14. Darauf sind auch die üblichen pH-Papiere, pH-Indikatorstäbchen und pH-Meter eingestellt; sie messen nur in diesem Bereich. In vielen Fällen ist es aber von Interesse, durch einen einfachen Anzeiger feststellen zu können, ob es sich bei einer vorliegenden Lösung um eine 1-, 3-, 5- oder 10-normale Säurelösung handelt. Dies kann bisher selbst von einem pH-Meter nicht geleistet werden. Vielmehr muß man eine verhältnismäßig aufwendige Titration mit Natronlauge durchführen, um den Gehalt zu ermitteln.

Aus dem Stand der Technik sind die theoretischen Grundlagen der Aciditätsfunktionen und auch eine Reihe von Indikatoren zur Bestimmung von Protonenkonzentrationen im übersauren Bereich bekannt (J. Amer. Chem. Soc. 54, 2721 (1932); T.H. Lowry und K.S. Richardson, Mechanismen und Theorie in der Organischen Chemie, Verlag Chemie, Weinheim, S. 90 - 100, 1980).
Die bekannten Indikatoren liefern jedoch in der Regel keine exakten Ergebnisse.

Der Erfindung liegt die Aufgabe zugrunde, Indikatoren zur Verfügung zu stellen, mit denen die Bestimmung von Protonenkonzentrationen im übersauren Bereich auf einfache Weise und mit deutlichen Farbumschlägen möglich ist.

Überraschenderweise wurde gefunden, daß schon verhältnismäßig einfach gebaute und im Prinzip bekannte Azofarbstoffe (DE 24 36 257) auch für den erfindungsgemäßen Zweck einsetzbar sind.

Gegenstand der Erfindung sind Indikatoren zur Bestimmung der Protonenkonzentration stark saurer wäßriger Lösungen, die dadurch gekennzeichnet sind, daß sie mindestens eine Verbindung der allgemeinen Formel (I) enthalten 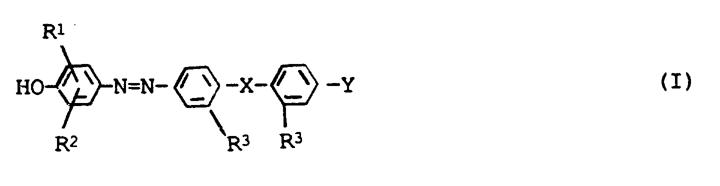
worin
- X: = CH =CH, NH,
- Y: = NO₂, 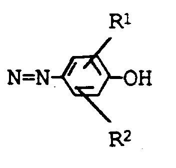
- R¹, R²: = H, F, Cl, Br, NO₂, OH, NH₂, Alkyl mit 1-6 C-Atomen,
- R³: = H, SO₃Na
bedeuten. Die Indikatoren sind vorzugsweise auf einen Träger aufgebracht.

Ein weiterer Gegenstand der Erfindung ist die Verwendung der Indikatoren der allgemeinen Formel (I) zur Bestimmung der Protonenkonzentration in stark sauren wäßrigen Lösungen.

Diese Verbindungen werden aus in der Farbstoffchemie bekannten Grundkörpern hergestellt, die den Farbstoffen erfahrungsgemäß substantiven Charakter verleihen. Die Grundkörper tragen ein oder zwei Aminogruppen, die diazotiert und mit einfachen Phenolen zu den erfindungsgemäßen Indikatoren gekuppelt werden (Ullmann, Band A 3, 5. Auflage, 1985, Seiten 279-280).

Als besonders vorteilhaft haben sich folgende Grundkörper erwiesen: Diaminostilben (1) bzw. Diaminodiphenylamin (2) 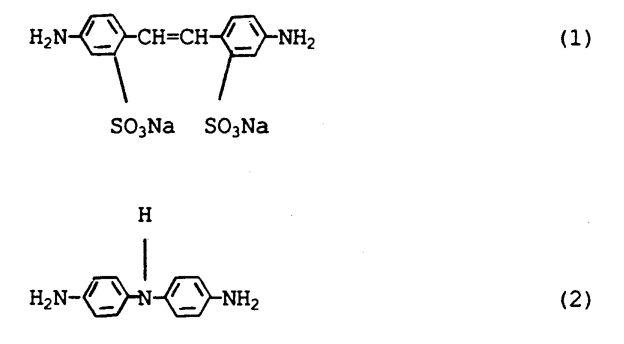
Die Diazotierung und anschließende Kupplung dieser Grundkörper kann einseitig oder zweiseitig erfolgen. Die einseitige Azogruppenausbildung ist vorteilhaft, wenn man eine Konjugation zwischen para-ständiger OH-Gruppe und elektronenziehender Nitrogruppe im gegenüberliegenden Benzolkern erreichen will (3) 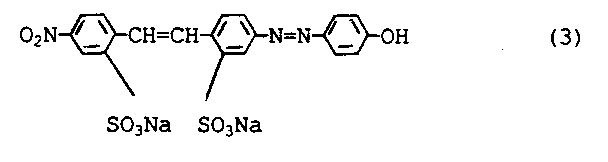
Die Darstellung dieser und ähnlicher Verbindungen ist z.B. in Ullmann, Band A 3, 5. Auflage, 1985, Seite 255, beschrieben.

Als Kupplungskomponenten werden einfache Phenole eingesetzt. Bevorzugte Indikatoren haben deshalb die folgenden Strukturen (4) und (5): 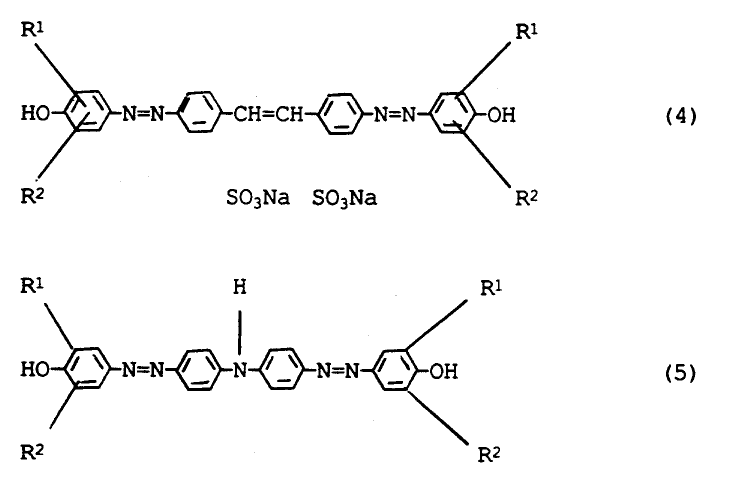
wobei R¹ und R² die oben angegebene Bedeutung haben.

Die einfachen Phenole sind meist in ortho-Stellung ein- oder zweifach substituiert. Durch entsprechende Substituenten kann man den Anzeigebereich des Indikators verschieben. Elektronengebende Substituenten, z.B. weitere OH-Gruppen, verschieben in den weniger sauren Bereich, elektronenziehende Substituenten, wie Fluor, Chlor, Brom oder die Nitrogruppe, verschieben in den stärker sauren Bereich. Es ist so möglich, den übersauren pH-Bereich weitgehend abzudecken.

Die Substanzen können in Lösung wie andere pH-Indikatoren eingesetzt werden. Vorteilhafter werden jedoch Materialien aus Cellulose, z.B. Papier, Folien oder Gewebe mit diesen Substanzen eingefärbt. Wegen ihrer Substantivität bleiben sie auf diesen Materialien verhältnismäßig fest haften und eignen sich so z.B. in Streifenform direkt zur Anzeige der Säurekonzentration. In anderen Ausführungsformen wird das gefärbte Material auf einer farblosen oder weißen Kunststoffolie als Träger befestigt und kann so nicht nur visuell, sondern auch fotometrisch im Durchlicht oder in Remission ausgewertet werden.

### Beispiel 1

Die nachstehende Tabelle zeigt die Abhängigkeit des Farbänderungsbereichs von der Substitution bei pH-Indikatoren der oben angegebenen Formel (4) und von der Protonenkonzentration der Probelösung. Die Farbänderungen gehen in der Regel von gelb über grün nach blau und violett.

| Substituenten R¹, R² | Farbänderungen bei folgenden Schwefelsäurekonzentrationen |
|---|---|
| OH, OH | 0,1- 4 N |
| H, H | 1- 8 N |
| H, Cl | 4-10 N |
| Cl, Cl | 8-16 N |

Bei den Farbstoffen, die sich von der oben angegebenen Formel (5) ableiten, tritt bei höheren Säurekonzentrationen wieder eine Aufhellung ein. Die Farbänderungen gehen z.B. im sauren Bereich von gelb über grün und blau wieder nach grün und schließlich nach orange.

Durch Kombination verschiedender Indikatoren ist es möglich, den gesamten sauren und übersauren Bereich abzudecken.

### Beispiel 2

### Herstellung von Bis (3,4-dihydroxyphenyl)-azo-4',4''-stilben-2',2''-disulfonsäure

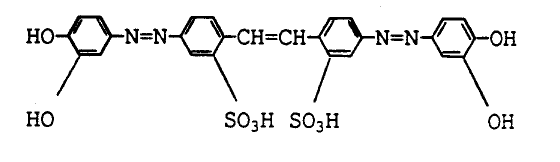

3,7 g 4,4'-Diaminostilben-disulfonsäure-2,2' werden in 12,5 ml 2 N Natronlauge und 50 ml Wasser gelöst, 1,38 g Natriumnitrit hinzugefügt und auf 5 °C abgekühlt. Unter Rühren werden bei 5 °C 50 ml 1 N Salzsäure hinzugegeben. Diese Diazoniumsalzlösung wird in eine 10 °C kalte Mischung von 4,4 g Brenzcatechin, 12,3 g Natriumacetat und 500 ml Ethanol eingetragen. Es wird 1 Stunde gerührt und vom Unlöslichen abfiltriert. Zum Filtrat werden weitere 30 g Natriumacetat hinzugegeben und im Vakuum das Ethanol weitgehend abdestilliert. Aus der wässrigen Natriumacetatlösung scheiden sich Kristalle ab, die abgesaugt und mit wenig Eiswasser gewaschen werden. Ausbeute 1,4 g (22,9 % d.Th.).

### Beispiel 3

### Herstellung und Funktionsweise eines Teststäbchens für den übersauren Bereich

Es werden folgende 3 Lösungen hergestellt:
1) 10 mg des Azofarbstoffs aus Bis(4-aminophenyl)amin und Brenzcatechin in 50 ml 40%igem Ethanol.
2) 10 mg des Azofarbstoffs aus 4,4'-Diaminostilbendisulfonsäure(2,2') und Brenzcatechin in 50 ml Wasser.
3) 10 mg des Azofarbstoffs aus 4,4'-Diaminostilbendisulfonsäure(2,2') und 2,6-Dichlorphenol in 50 ml Wasser.

In jede dieser Lösungen werden 6 mm breite und 300 mm lange Filterpapierstreifen (z.B. Schleicher und Schüll Nr. 604) getaucht und anschließend getrocknet.

Die so erhaltenen 3 Indikatorpapierstreifen werden mit beidseitig klebendem Band auf eine 75 mm breite, 0,2 mm dicke und 300 mm lange weiße PVC-Folie geklebt. Die 1. Zone steht dabei direkt am Rand der Folie. Der Abstand zwischen den einzelnen Zonen beträgt jeweils etwa 3 mm. Das Folienband wird anschließend in 6 mm breite Teststäbchen zerschnitten. Auf jedem Teststäbchen befinden sich jetzt 3 Testzonen, die im übersauren Bereich folgende Farben zeigen:

| Schwefelsäure | Zone 1 | Zone 2 | Zone 3 |
|---|---|---|---|
| 1 N | graugrün | orangegelb | gelb |
| 2 N | grünblau | bräunlich gelb | gelb |
| 4 N | grünblau | graubraun | gelb |
| 6 N | grünblau | bläulich violett | gelb |
| 8 N | grünblau | blau | gelb |
| 10 N | grünblau | blau | grünlichgrau |
| 12 N | grün | blau | violett |
| 14 N | gelbgrün | blau | blauviolett |
| 16 N | gelb | violett | blauviolett |
| 18 N | gelb | violett | blauviolett |
| konz. | gelb | violett | blauviolett |

Wie aus der Tabelle zu ersehen ist, dient im Bereich zwischen 1 N und 8 N Schwefelsäure Zone 2 als Indikator. Die Färbung der Zone ändert sich hier von orangegelb nach blau. Zwischen 8 N und 12 N Schwefelsäure ist Zone 3, die sich von gelb nach blauviolett verfärbt und zwischen 12 N und 16 N Zone 1, die sich hierbei von grün nach gelb verfärbt, der jeweilige Indikator.

Analoge Färbungen wurden mit anderen starken Säuren, wie Salzsäure, Salpetersäure und Perchlorsäure erhalten, wenn die entsprechenden Konzentrationen eingestellt waren.

## Patentansprüche

1. Indikatoren zur Bestimmung der Protonenkonzentration stark saurer wäßriger Lösungen, dadurch gekennzeichnet, daß sie mindestens eine Verbindung der allgemeinen Formel (I) enthalten 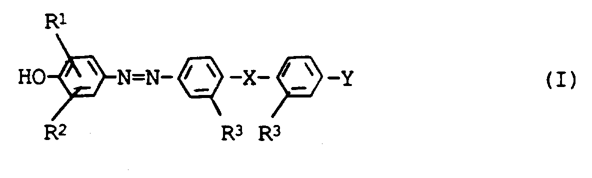 worin
X = CH =CH, NH,
Y = NO₂, 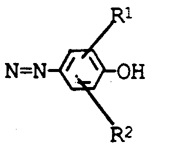
R¹, R² = H, F, Cl, Br, NO₂, OH, NH₂, Alkyl mit 1-6 C-Atomen,
R³ = H, SO₃Na
bedeuten.

2. Indikatoren nach Anspruch 1, dadurch gekennzeichnet, daß sie auf einen Träger aufgebracht sind.

3. Verwendung der Indikatoren der allgemeinen Formel (I) zur Bestimmung der Ionenkonzentration in stark sauren wäßrigen Lösungen.
